Europäisches Patentamt

**European Patent Office**

**Office européen des brevets**

(19)

(11) Publication number: **0 175 028**
**A1**

(12) # EUROPEAN PATENT APPLICATION

(21) Application number: **84306399.1**

(22) Date of filing: **19.09.84**

(51) Int. Cl.⁴: **F 16 K 7/07, F 16 J 3/00**

(43) Date of publication of application: **26.03.86**
**Bulletin 86/13**

(84) Designated Contracting States: **AT BE CH DE FR GB IT LI LU NL SE**

(71) Applicant: **MIL MUTZARIM TECHNIIM (1971) B.M., Habanai Street 25, Ezor Hataasiah Holon (IL)**

(72) Inventor: **Zakai, Avi, 10 Nachal Soreq Street, Rishon LeZion (IL)**

(74) Representative: **Silverman, Warren et al, HASELTINE LAKE & CO. Hazlitt House 28 Southampton Buildings Chancery Lane, London WC2A 1AT (GB)**

(54) **Hydraulic cut-off or throttling valve.**

(57) A hydraulic cut-off or throttling valve comprises a substantially cylindrical core body (25) formed of two layers (26 and 28 respectively) of resilient material with a mesh layer (27) therebetween. The body has axially extending outer surfaces and axially extending inner surfaces that form therewith a slit-like aperture. The mesh layer (27) functions to protect the inner layer (26) of resilient material from overexpansion due to excessive pressures to which it may be subjected, thus protecting it from tearing, without affecting its resiliency.

ACTORUM AG

"HYDRAULIC CUT-OFF OR
THROTTLING VALVE"

This invention relates to hydraulic cut-off or throttling valves.

Valve designers are constantly attempting to improve the operation of valves such as throttling and/or cut-off valves. One embodiment of such valves uses a core body of resilient material wherein a slit in the body forms the valve opening and the pressure in a chamber defined between the valve casing and the core body controls the operation of the valve. A species of this type of valve is known as the diaphragm valve. Diaphragm valves tend to tear due to the constant and repeated movements of the diaphragms. Also such valves do not generally have a good high pressure capacity. Various attempts have been made in the past to correct these inherent weaknesses. For example, cords or mesh material have been vulcanized into the core body to try to increase the pressure capacity and longevity of the valves. However, the beneficial effects have been countered by a decrease in body resiliency.

0175028

Therefore there is a long-felt need for improved throttling and cut-off valves to overcome the existing problems.

The hydraulic cut-off or throttling valves of the general kind with which the present invention is concerned, are valves wherein opening and closing and the degree thereof is dependent on the absence or presence of a hydraulic control pressure in the surrounding control chamber which pressure acts on resilient core members so as to bias the core members into closing of the valve. In hitherto known hydraulic cut-off or throttling valves of this kind the resiliently distortable member is an elastically distortable diaphragm which constitutes an effective wall of the control chamber and the valve is generally known as a diaphragm cut-off or throttling valve.

Repeated forced openings and closings of the slit-like apertures often tear the core members thereby upsetting both the flow and control characteristics of the valves. When the tear reaches the control chamber the valve is no longer useable, for practical purposes.

The vulnerability of the core bodies to rupture or tearing reduces the pressure capacity of this type of valve.

One way of increasing the pressure capacity of this type of valve is by vulcanizing a cord or a mesh material into the resilient core body material. The problem with that solution is that the resiliency of the core body material is substantially reduced. The lack of core body resiliency is overcome for example in U.S. Patent No. 2,633,154 by using resilient valve housing walls. However, with the usual housing this type of diaphragm valve in the past has suffered from either low pressure capacity or core bodies without sufficient resiliency.

According to one aspect of the present invention there is provided a hydraulic cut-off or throttling valve comprising a core body formed of a resilient material, said core body comprising axially extending outer surfaces and axially extending inner surfaces forming therewith a slit-like aperture to enable hydraulic flow through said valve when said slit is in an open position and to prevent hydraulic flow through said valve when said slit is in a closed position. The valve further comprises means for increasing the pressure capacity of the core body without reducing its resiliency. The pressure capacity increasing means inhibits tearing of the core body and results in a new and unique normally open valve configuration and operation.

0175028

The core body essentially comprises two layers of resilient material, example rubber, which are spaced apart by a layer of mesh material, e.g. cloth. The mesh material, hereafter simply referred to as cloth is free to spread out up to its dimensional limits, and thereafter withstand substantial pressure without tearing. The core body is secured at opposite end of a hollow housing or casing, typically cylindrical, which is connected in the fluid flow path. One of the rubber layers, hereinafter referred to as the inner layer, is exposed to the fluid flow, thus defining the inner surface while the other rubber layer, hereafter referred to as the outer layer is closest to the inner surface of the hollow casing and defines the outer surface of the core body. The cloth layer is between the inner and outer layers and is free to stretch out or expand to the limit of its length or contract or fold up between the two layers.

In one embodiment the housing consists of two semi-circular halves and the core body consists of two semi-circular halves, each with an inner and outer rubber layers and the intermediate cloth layer. All the layers are semi-circularly shaped and are secured to a semi-circular half of the casing. Thus when the two halves of the housing are clamped together the two halves of the core body are secured together to form a fluid tight axially extending cylindrically shaped core body. In another preferred embodiment of the invention the core body is originally formed to be cylindrical. The inner layer is formed as an elongated hollow rubber tube, surrounded by the cloth layer which is in turn surrounded by the outer layer also in the shape of an elongated hollow rubber tube. In this embodiment the core body can be viewed as comprising three concentric hollow cylinders with the inner and outer cylinders of resilient material, e.g. rubber and the intermediate cylinder of a mesh material. It is the intermediate cylinder which limits the expansion of the inner rubber cylinder due to pressures to which it is subjected, and thereby to prevent its tearing without loss of resiliency.

The novel features of the invention are set forth with particularity in the appended claims. The invention will best be understood from the following description when read in conjunction with the accompanying drawings.

Figures 1 and 2 are diagrams useful in explaining one embodiment of the invention;

Figures 3, 4 and 5 are diagrams useful in explaining another embodiment of the invention;

Figure 6 is a diagram useful in highlighting the advantages of the invention; and

Figures 7, 8a, 8b, 8c, 9a, 9b and 9c are cross-sectional views useful in explaining other embodiments of the invention.

- 6 -

0175028

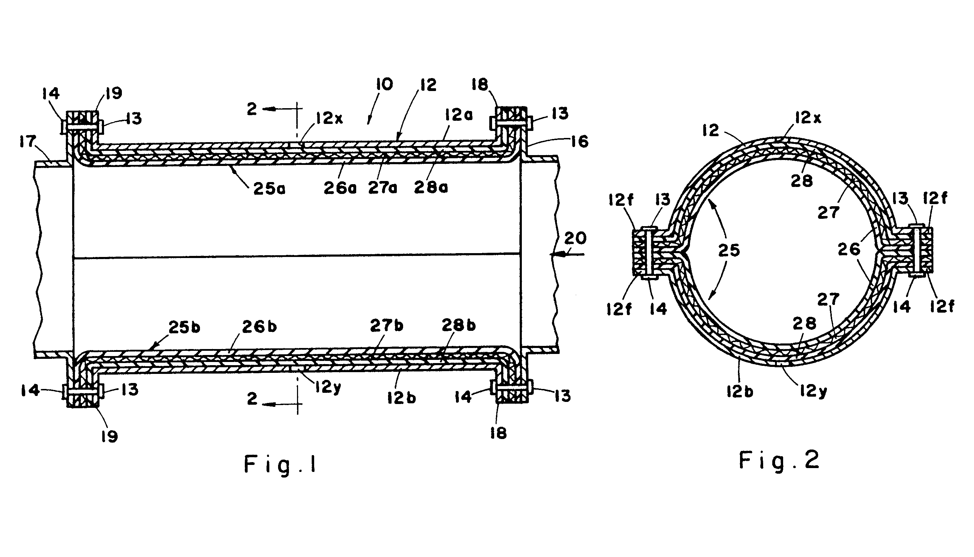

Attention is now directed to Fig. 1 which is a cross-sectional view of one embodiment of the valve 10. A cross-sectional view of this valve 10 along lines 2-2 in Fig. 1 is shown in Fig. 2.

The valve 10 consists of an axial casing 12 comprising of two identical sections 12a and 12b which, as shown in Fig. 2 are semi-circular with axial flanges 12f extending outwardly therefrom. Fig. 2 is a cross-sectional view along lines 2-2 in Fig. 1. Appropriate means, such as bolts 13 and nuts 14 are used to secure the two halves 12a and 12b of the casing to effectively form the cylindrical casing. The casing halves 12a and 12b are provided with radial end flanges 18 and 19. After the two halves are coupled together to form casing 12 these flanges are used to connect the casing 12 to inlet and outlet pipes 16 and 17 by bolts 13x and nuts 14x. The flow direction is indicated by arrow 20.

Each of the casing halves 12a and 12b is used to support one half of a novel core 25, the core halves being designated by 25a and 25b. The half core 25a consists of a sandwich type structure, made up of an inner layer 26a, an intermediary layer 27a and an outer layer 28a. Both layers 26a and 28a are made of a highly resilient material, e.g. rubber. These layers are separately vulcanized. The intermediary layer 27a consists of a layer made of a flexible mesh material, e.g. cloth. It is not bonded to either of layers 26a and 28a on either side of it. Rather it is free to expand or stretch up to a certain limit as will be described, as well as contract between 26a and 28a. It is the ability of cloth layer 27a to stretch freely between layers 26a and 28a to a certain limit that provides the present invention with unexpected novel advantages.

The other half core 25b, likewise, consists of a sandwich type structure, identical to that of core body half 25a. The three layers of core half 25b are designated by 26b, 27b and 28b, respectively. The two halves 25a and 25b of the core 25 are secured to the axial flanges 12f of the casing 12, as shown in Fig. 2, and to the end flanges 18 and 19, as shown in Fig. 1. It is clear from Fig. 2 that once the core 25 is secured to the casing 12 the core effectively consists of three concentric hollow cylinders. Inner rubber layers 26a and 26b form an inner rubber cylinder 26, spaced apart from an outer rubber cylinder 28 by a cloth layer 27 in the shape of a cylinder. Each of these cylinders is formed of two respective halves.

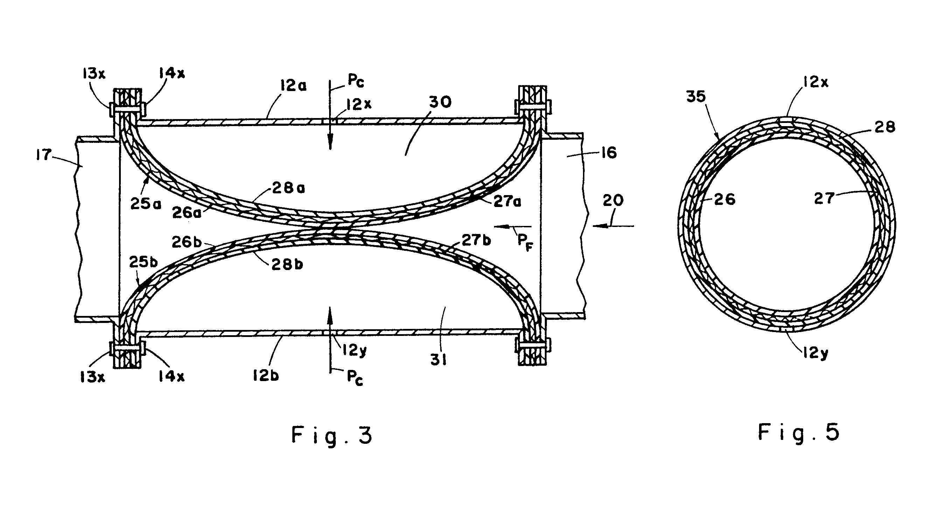

In Figs. 1 and 3 the valve 10 is shown in its open and closed positions or states, respectively. In the particular embodiment the casing 12 is provided with two parts 12x and 12y in the casing halves 12a and 12b respectively. These parts are used to apply hydraulic pressure $P_c$ into the casing against the outer surfaces of layers 28a and 28b and thus force the inner rubber layers 26a and 26b to press and abut one another, as shown in Fig. 3, thus closing the valve.

Basically, one can view the volume defined by casing half 12a and the outer surface of layer 28a as one control pressure chamber 30. A separate pressure chamber 31 is formed between casing half 12b and rubber layer 28b. In Fig. 3 the valve 10 is shown closed without a central barrier. However, the novel valve can be used in conjunction with a cylindrical barrier in the flow path. In such a case the inner layers 26a and 26b press against the barrier periphery to close the valve.

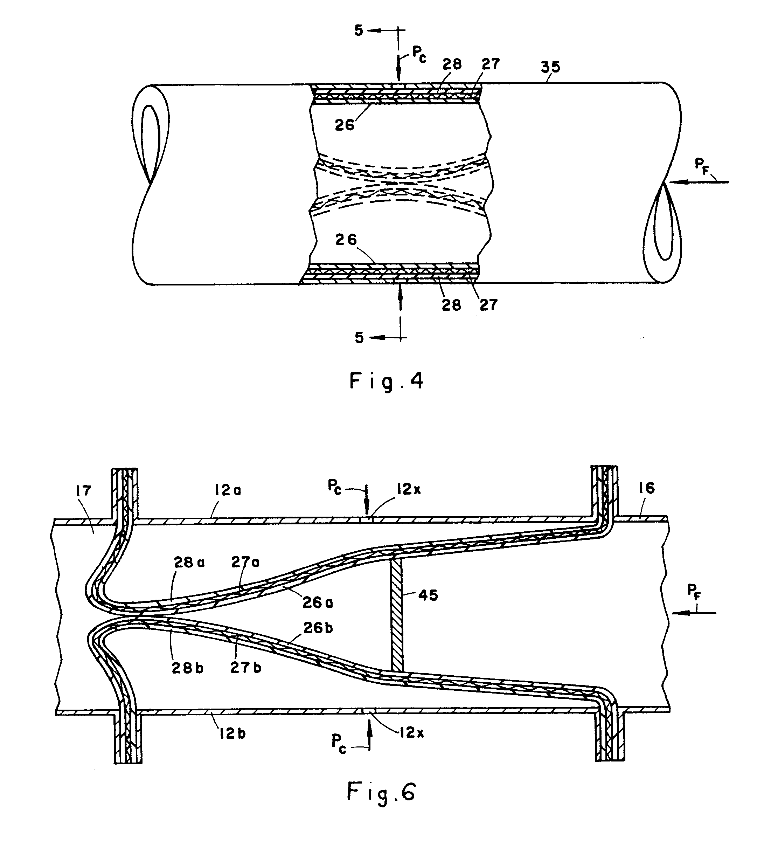

Before describing in detail the novel and unexpected advantages of the novel core 25 attention is now directed to Figs. 4 and 5, in connection with which a second embodiment of the invention will be described. Fig. 5 is a cross-sectional diagram along lines 5-5 in Fig. 4. In this embodiment the casing 12 is not formed of two semi-circular halves 12a and 12b with axial flanges 12f. Rather, the casing is a hollow cylindrical pipe 35 with end radial flanges 35a and 35b, which are analogous to end flanges 18 and 19 in the Fig. 1 embodiment.

0175028

As to the novel core 25 it is made of three concentric hollow cylinders, each of a single piece rather than two halves. In Fig. 5 they are given the same designations as the cylinders shown in Fig. 2, i.e. 26, 27 and 28, with 26 and 28 being the rubber cylinders and 27 the cloth cylinder. It should be stressed that in the presently described embodiment, each of these cylinders is not made up of two semi-circular halves, such as 26a and 26b, which form the inner rubber cylinder 26, but rather as one integral cylindrical body. They are supported inside casing 35 by being attached to flanges 35a and 35b. These flanges are also used to attach casing 35 to the inlet and outlet pipes 16 and 17.

In Fig. 4 the core body 35 is shown by solid lines in the open position and by the dashed lines in the closed position. The core body of this embodiment can thus be thought of as having a cylindrical sandwich configuration in that it consists of two hollow concentric rubber cylinders 26 and 28, spaced apart by an intermediary cylinder 27 of cloth (or other mesh material).

As is appreciated by those familiar with the type of valves to which the invention is directed, i.e. to a diaphragm or throttling type valve, for proper operation, it is important that the core be highly resilient to switch quickly between the open and closed states and thus open or close the flow path in response to the particular control pressures. A core first vulcanized to be in the open state for a normally open (NO) valve (as shown in Fig. 1) has to be resilient enough to close the valve as shown in Fig. 3 in response to the control pressure $P_c$ applied via the pressure in the control chambers 30 and 31. See Fig. 3. On the other hand, a core, vulcanized to be in the closed state, i.e. normally closed (NC), has to be resilient enough to expand as a result of the pressure of the fluid from the inlet end and open up to enable the fluid to flow through the valve 10. The higher the resiliency of the core the faster is the valve's response time. Thus, high resiliency is a sought-after property. At the same time, the core has to be sufficiently strong to withstand the various pressures, e.g. the control pressure Pc and the upstream fluid pressure designated in Fig. 3 by $P_F$, without tearing.

In the prior art cores have been used with thick layers of rubber to provide the desired strength. See for example, U.S. Patent No. 3,965,925. However, in such a core the thick layers of rubber have very limited resiliency. In U.S. Patent No. 2,633,154 a core is described in which fabric, designated therein by 23, is embedded in flexible semi-circularly shaped diaphragms 2 and 3, which are joined at their lateral edges at 4 and whereat they are supported by resilient side walls 16 and 17. As stated therein the fabric is embedded in order to minimize the stretching of these members, namely members 2, 3, 16 and 17. By embedding the fabric the stretching is indeed reduced. However, since the fabric is embedded in the rubber during the vulcanization, it also greatly reduces the resiliency of the core. Thus, the tearing problem is resolved at the price of resiliency, which is undesirable.

Unlike the prior art, in the present invention by the incorporation of the cloth layer 27 which is neither bonded to nor embedded in either of the rubber layers 26 and 28, the core has both optimal resiliency and strength. Briefly, the diameter of the cylindrically shaped cloth layer 27 is chosen so that when the valve is forced to its open position by the fluid pressure $P_F$ (see Fig. 5) expanding the inner rubber layer 26 once the latter expanded to a degree which stretches the cloth layer 27 to its limit, i.e. to its maximum diameter, the cloth layer 27 cannot stretch any more. Thus, it limits the extent to which the inner rubber layer 26 can expand. The circumference of the cloth layer in a direction perpendicular to its length is chosen to limit the diameter of the inner rubber layer 26 when the latter is expanded by the fluid pressure $P_F$ to a value which is below the tearing point of layer 26. Thus the latter is protected from tearing due to expansion by the cloth layer which acts as a shield around it. However since the cloth layer 27 is not embedded in rubber layer 26, the latter's resiliency is not affected and remains high. It should be pointed out that the inner layer 26 may be prevented from over stretching by designing the core so that when the valve is fully open the casing 12 acts as a shield thus preventing over-expansion. However the casing cannot serve to provide protection for the core when the valve is driven to its closed state by pressure $P_c$. This will become clearer from the following description.

As is appreciated by those familiar with the art of valves of the type to which this invention is directed, sometimes the core can become subjected to excessive control pressure $P_c$ when the valve is driven to the closed state, as shown in Fig. 6, wherein numeral 45 designates a barrier. This is due to the fact that when the valve is closed, the downstream pressure is typically low, while the control pressure $P_c$ is high. Consequently the core may tend to be sucked or stretched excessively in downstream direction. In the prior art an array of fingers is employed, at least on the downstream side, to prevent the excessive stretching of the core. In the present invention such fingers are not required. Any control pressure Pc which is exerted on the outer layer 28 spreads evenly on the cloth layer 27. The latter when being fully stretched to its fixed limit, prevents any further stretching of either of the two rubber layers 26 and 28. By limiting their stretching to the maximum possible by the cloth layer 27, the tearing of either rubber layer is prevented. It should be stressed again that the cloth layer 27 is free to expand and contract between the two rubber layers. It is not bonded or embedded in either of them, and thus it does not reduce their resiliency.

From the foregoing it should thus be appreciated that by providing a core made up of three concentric hollow cylinders, two of resilient matter and the intermediary one of mesh material, the maximum expansion of the inner and outer cylinders is effectively controlled by the intermediary mesh cylinder. Thus the resiliency of the inner and outer layers is not reduced while their maximum expansion is controlled to prevent them from tearing due to excessive stretching. These advantages are realized whether the core is formed of two halves each with three semi-circular layers as shown in Figs. 1 to 3 or from three concentric cylinders, each as an integral cylinder, as described in connection with Figs. 4 and 5.

It should be apparant that in the embodiment shown in Figs. 1 to 3 with the core 25 of two halves there are two distinct control chambers 30 and 31 (see Fig. 3) which are formed between the casing inner surface and the outer surfaces of outer layers 28a and 28b. In Fig. 3 it is assumed that the valve is closed by the application of the control pressure $P_c$

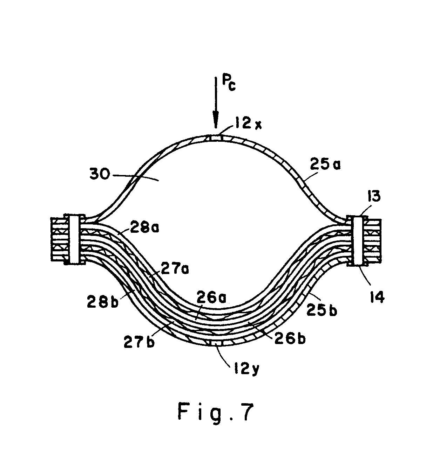

into each of these chambers. Thus the two halves 25a and 25b of the core 25 are pushed toward one another. If desired control pressure $P_c$ may be applied to one of the chambers, e.g. chamber 30 through opening 12x only. In such a case core half 25b will not be pushed inwardly, while core half 25a will be pushed all the way toward core half 25b. Such a closed state is shown in Fig. 7. Clearly the reverse is also possible. That is one can close the valve by applying control pressure to only chamber 31 through opening 12y.

In the foregoing it was assumed that the novel three piece core is made of either semi-circular identical halves 25a and 25b (see Fig. 2) or three concentric cylinders each as an integral unit (see Fig. 5). The invention is not intended to be limited thereto. If desired each of the layers 27 and 28 may be formed as two halves while inner layer 26 may be formed as an integral hollow rubber cylinder. Also if desired only outer layer 28 may be formed of two halves 28a and 28b while each of layers 26 and 27 may be formed as a hollow cylinder.

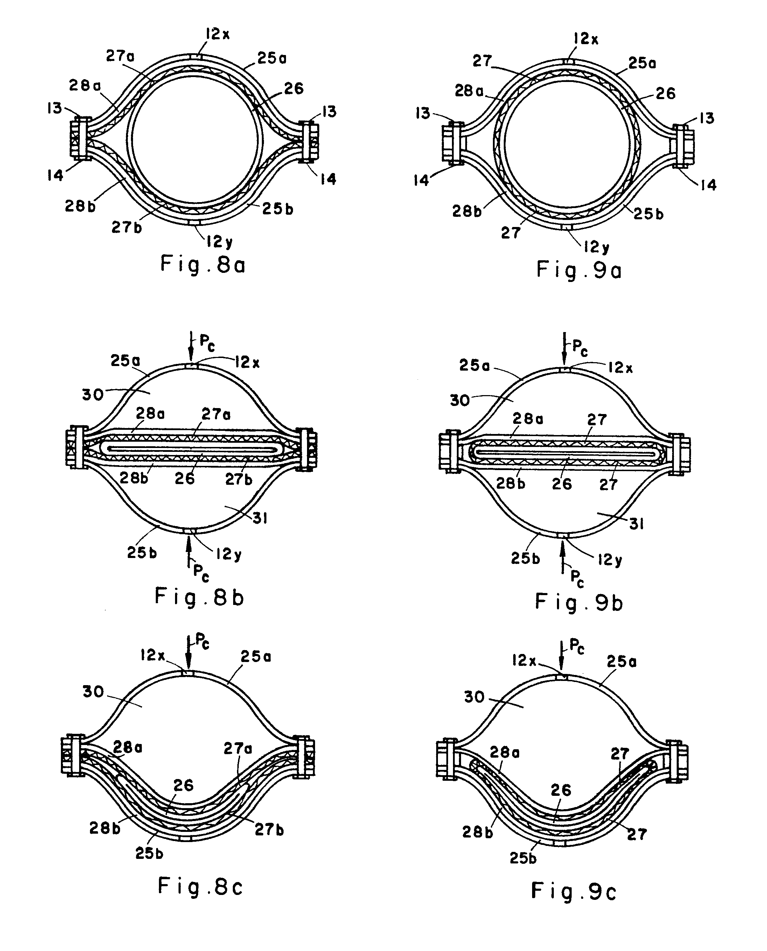

The latter-mentioned embodiments of the invention may best be explained in connection with Figs. 8a, 8b and 8c and 9a, 9b and 9c. In each of these Figures, the valve is shown in cross-sectional view in a plane perpendicular to the fluid flow about mid-point between the casings and flanges 18 and 19. In these Figures at the center each casing half is parabolically shaped to form an oblong opening which tapers down toward the two opposite ends whereat the opening is essentially cylindrical. In Figs. 8a, 8b and 8c an embodiment is shown in which the core 25 comprises layers 27 and 28, each of two halves, while the inner layer is a one-piece cylindrical tube. In Fig. 8a the valve is in the open position while in each of Figs. 8b and 8c it is shown in the closed state. In Fig. 8b closure is due to control pressure $P_c$ from both sides, while in Fig. 8c the control pressure is only in the upper chamber 30. In either case, the inner layer 26 is flattened and pressed between the two halves 27a and 27b of the mesh, which is in turn pressed by the outer layer 28. Figs. 9a, 9b and 9c are similar to Figs. 8a, 8b and 8c except that in Figs. 9c-9c the core consists of the two halves 28a and 28b of only outer layer 28, while layers 26 and 27 are integral concentric cylinders of rubber and cloth, respectively.

CLAIMS

1.      In a throttling valve of the type including
a casing having internal wall surfaces defining a passage
for fluid to flow therethrough, and a core body,lining
said passage and secured in fluid-tight relationship
to said casing at the ends thereof, said casing and said
core body forming at least one pressure chamber for
controlling the flow of fluid in said passage as a function
of the deformation of said core body the latter comprising:
        inner,intermediary and outer flexible deformable
layers defining separate concentric tubes, with said outer
tube closest to the surfaces of the casing internal wall
and the inner tube closest to the center of said passage,
said intermediary tube being of mesh material of finite
stretchability.

2.      In a throttling valve a core body as recited
in Claim 1 wherein said inner and outer tubes are of flexible
rubber with said intermediary tube of mesh material therebetween,for controlling the stretching of said rubber tubes,
due to pressures applied thereto.

3.      In a throttling valve a core body as recited
in Claim 1 wherein at least one of said tubes comprises
a single tube-shaped layer.

4.      In a throttling valve a core body as recited
in Claim 3 wherein said at least one of said tubes
comprises at least the inner tube which is formed of
rubber.

5.      In a throttling valve a core body as recited
in Claim 3 wherein each of said inner and intermediary
tubes is formed of a single tube-shaped layer.

6.      In a throttling valve a core body as recited
in Claim 5 wherein the inner and intermediary tubes are
of rubber and cloth, respectively.

7.      In a throttling valve a core body as recited
in Claim 1 wherein at least the outer tube is formed of
two substantially semicircularly shaped layers with
outwardly extending flanges, joinable together to form
said outer tube within said casing.

8.      A throttling valve comprising;
casing means having an axial elongated circular
through opening and outwardly extending radial flanges at
either end thereof;
a core body comprising three substantially
concentric hollow cylinders extending rhrough said casing
means, said cylinders including inner and outer cylinders
of resilient material and an intermediary cylinder,
formed of mesh-like material, which is not bonded to
either of the other cylinders, the mesh-like material having a preselected peripheral dimension in a direction perpendicular to its axis, to limit the stretching of the material of either of the other two cylinders in response to pressures applied thereto; and

means for securing said core body to said casing means at the flanges thereof.

9.      A throttling valve as recited in Claim 8 wherein said inner and outer cylinders are formed of rubber and said intermediary cylinder of mesh-like material is stretchable and collabsible between said rubber layers.

10.     A throttling valve as recited in Claim 9 wherein said intermediary layer is formed of cloth.

11.     A throttling valve comprising;

an elongated core body including two substantially identical halves each elongated half comprising:

three layers defining an inner layer of resilient material, an outer layer of resilient material and an intermediary layer of mesh-like material; and

an elongated casing including two identical halves, each elongated casing half being substantially semi-circularly shaped with two external flanges; and

- 19 -

coupling means for coupling said two casing halves to each other, with each half of said core body supported within a different half of said casing, whereby said casing forms a pipe with a hollow cylindrical axial opening within which the two halves of the core body form three concentric hollow circular tubes, with the inner, intermediary and outer layers forming an inner tube, an intermediary tube and an outer tube, the inner tube being adapted to stretch to a cross-sectional dimension which is not great er than the periphery of the mesh-like layer adjacent thereto, sucject to pressures applied thereto.

12. A throttling valve as recited in Claim 11 wherein the space between the inner surface of at least one of casing half and the outer surface of the outer layer of the core body supported therein defines a control chamber, with the casing half having an opening for controlling the pressure in said control chamber to control the switching of said core body from an open state, in which the inner layers of the two halves of the core body are spaced apart from one another, to a closed position in which the pressure in the control chamber is chosen to push the two halves of the core body towards one another.

13.    A valve as recited in Claim 12 wherein said inner and outer layers of each half of the core body are made of rubber and the mesh-like material of the intermediary layer is cloth.

0175028

Fig. 2

Fig. 1

0175028

Fig. 5

Fig. 3

Fig. 4

Fig. 6

Fig.7

Fig.8a

Fig.9a

Fig.8b

Fig.9b

Fig.8c

Fig.9c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 396 448 (SCHLUMBERGER TECHNOLOGY CORP.) * Column 2, lines 34-39; column 5, lines 12-18 * | 1,2,3, 5 | F 16 K 7/07 <br> F 16 J 3/00 |
| A | GB-A- 678 318 (H.W. HAPMAN) | | |
| A | US-A-3 441 245 (THE GALIGHER CO.) | | |
| A | US-A-3 039 733 (MONTECATINI) | | |
| A | US-A-2 964 285 (STE DES CIMENTS DE MARSEILLE ET D'OOTRE MER) | | |

**TECHNICAL FIELDS SEARCHED (Int. Cl.4)**

F 16 K 7/00
F 16 J 3/00

The present search report has been drawn up for all claims

| Place of search | Date of completion of the search | Examiner |
|---|---|---|
| THE HAGUE | 15-05-1985 | DE SMET F.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82